# EUROPÄISCHE PATENTSCHRIFT

(11) **EP 2 602 455 B1**
(45) Veröffentlichungstag und Bekanntmachung des Hinweises auf die Patenterteilung: **11.02.2015**
(21) Anmeldenummer: 11009663.3
(22) Anmeldetag: 07.12.2011
(51) Int. Cl.: F02C 7/047, F03D 11/00, F03D 1/06

(54) **Windenergieanlagenrotorblatt mit einem elektrischen Heizelement**
Wind energy assembly rotor blade with an electrical heating element
Pale de rotor d'éolienne dotée d'un élément chauffant électrique

(43) Veröffentlichungstag der Anmeldung: 12.06.2013
(73) Patentinhaber: Nordex Energy GmbH, 22419 Hamburg (DE)
(72) Erfinder: Löwe, Astrid, 22301 Hamburg (DE); Renchler, Oskar, 22941 Delingsdorf (DE); Rindt, Philipp, 18057 Rostock (DE)
(74) Vertreter: Hauck Patent- und Rechtsanwälte

(56) Entgegenhaltungen:
- WO-A1-00/79128
- WO-A1-03/058063
- WO-A1-2007/121501
- WO-A1-2011/127996
- WO-A1-2011/148049
- US-A- 6 145 787
- US-B1- 7 157 663

## Beschreibung

Die Erfindung betrifft ein Windenergieanlagenrotorblatt, das ein faserverstärktes Kunststoffmaterial und eine elektrische Heizeinrichtung mit elektrischen Anschlüssen an einem blattwurzelseitigen Ende aufweist.

Windenergieanlagen werden bevorzugt an Standorten mit hohen und möglichst konstanten Windgeschwindigkeiten errichtet. Oftmals herrschen dort geringe Temperaturen, so dass sich bei bestimmten Wetterlagen Eis an den Rotorblättem bilden kann. Der Ansatz von Eis an den Rotorblättern beeinträchtigt den Betrieb der Windenergieanlage. Daher werden in kalten Regionen Eiswam- oder Enteisungssysteme verwendet.

Ein Eiswamsystem sorgt dafür, dass die Windenergieanlage bei entsprechenden Wetterbedingungen vorbeugend abgeschaltet wird. Dies hat Ertragseinbußen zur Folge. Ein Enteisungssystem verhindert, dass sich Eiskristalle an den Rotorblättern bilden. Somit ermöglicht ein Enteisungssystem, die Windenergieanlage weiterhin in Betrieb zu lassen und die Ertragseinbußen zu reduzieren oder sogar zu vermeiden.

Aus dem Stand der Technik ist bekannt, Heizelemente an der Außenfläche der Rotorblätter einer Windenergieanlage zu installieren. Heizelemente werden bevorzugt in Bereichen nahe der Blattmitte bis hin zur Blattspitze installiert, wo die Bildung von Eiskristallen die aerodynamische Wirksamkeit der Windenergieanlagenrotorblätter beeinträchtigt und damit störend ist. Solche Heizelemente werden mittels elektrischer Leitungen, die ausgehend von einem blattspitzenseitigen Ende und von einem blattwurzelseitigen Ende des Heizelements zur Rotorblattwurzel führen, an eine elektrische Energiequelle der Windenergieanlage angeschlossen, wobei die elektrischen Leitungen aus gewöhnlichen Kabeln bestehen.

Aus der Druckschrift WO 2011/127997 A1 ist bekannt geworden, eine schleifenförmig verlaufende Heizmatte an der Außenseite eines Windenergieanlagenrotorblatts anzuordnen. Die elektrischen Anschlüsse der Heizmatte befinden sich an den beiden freien Enden der schleifenförmigen Heizmatte nahe der Blattwurzel. Von dort führen ein erster Abschnitt und ein zweiter Abschnitt der Heizmatte jeweils zur Blattspitze. An der Blattspitze ist die Heizmatte umgelenkt, so dass die beiden Abschnitte in einem Übergangsbereich ineinander übergehen. In einem Ausführungsbeispiel überlappen sich die beiden Abschnitte der Heizmatte entlang einer Nasenkante des Rotorblatts. In einem anderen Ausführungsbeispiel weist die Heizmatte einen dritten Abschnitt auf, der über einen weiteren elektrischen Anschluss nahe der Blattwurzel verfügen kann. Bei der bekannten Lösung ist es nicht erforderlich, elektrische Anschlussleitungen zu einem blattspitzenseitigen Ende der Heizmatte zu führen. Dadurch soll die Gefahr eines Blitzschlags verringert werden.

Aus dem US-Patent Nr. 6,145,787 ist ein Windenergieanlagenrotorblatt und ein Verfahren zu dessen Herstellung mit den Merkmalen der Oberbegriffe des Anspruchs 1 bzw. 9 bekannt geworden.

Davon ausgehend liegt der Erfindung die Aufgabe zugrunde, ein Windenergieanlagenrotorblatt mit einer elektrischen Heizeinrichtung mit elektrischen Anschlüssen an einem blattwurzelseitigen Ende zur Verfügung zustellen, das einfacher hergestellt werden kann und eine bedarfsgerechte Heizleistung entwickelt, sowie ein Verfahren zu dessen Herstellung.

Diese Aufgabe wird durch das Windenergieanlagenrotorblatt mit den Merkmalen des Anspruchs 1 gelöst. Bevorzugte Ausgestaltungen sind in den sich anschließenden Unteransprüchen angegeben.

Das Windenergieanlagenrotorblatt besteht aus einem faserverstärkten Kunststoffmaterial und besitzt eine elektrische Heizeinrichtung mit elektrischen Anschlüssen an einem blattwurzelseitigen Ende. Es ist aus einer ersten Rotorblatthalbschale und einer zweiten Rotorblatthalbschale aus einem faserverstärkten Kunststoffmaterial zusammengefügt. Die elektrische Heizeinrichtung weist Folgendes auf:
- ein erstes Heizelement, das ein blattwurzelseitiges Ende und ein blattspitzenseitiges Ende aufweist und bei der Herstellung der ersten Rotorblatthalbschale gleichzeitig mit Verstärkungsfasern der ersten Rotorblatthalbschale durch Aushärten eines flüssigen Kunststoffmaterials in eine Kunststoffmatrix eingebettet worden ist,
- ein zweites Heizelement, das das ein blattwurzelseitiges Ende und ein blattspitzenseitiges Ende aufweist und bei der Herstellung der zweiten Rotorblatthalbschale gleichzeitig mit Verstärkungsfasern der zweiten Rotorblatthalbschale durch Aushärten eines flüssigen Kunststoffmaterials in eine Kunststoffmatrix eingebettet worden ist,
- ein drittes Heizelement, das mit der ersten Rotorblatthalbschale und mit der zweiten Rotorblatthalbschale verbunden ist und ein blattwurzelseitiges Ende und ein blattspitzenseitiges Ende aufweist,
- wobei die blattspitzenseitigen Enden des ersten, zweiten und dritten Heizelements elektrisch leitend miteinander verbunden sind und
- die blattwurzelseitigen Enden des ersten, zweiten und dritten Heizelements jeweils mit einer elektrischen Anschlussleitung verbunden sind.

Das Windenergieanlagenrotorblatt kann zum Beispiel für eine Windenergieanlage mit einem Rotor mit im Wesentlichen horizontaler Achse vorgesehen sein. Der Rotor kann eine Rotornabe aufweisen, an der beispielsweise zwei, drei oder mehr Windenergieanlagenrotorblätter befestigt sind. Hierzu kann jedes Windenergieanlagenrotorblatt im Bereich der Blattwurzel einen Befestigungsflansch aufweisen.

Jedes der drei Heizelemente kann im Wesentlichen in einer Längsrichtung des Rotorblatts angeordnet sein und zwischen seinem blattwurzelseitigen und blattspitzenseitigen Ende eine Länge von beispielsweise mindestens 30%, mindestens 50% oder mindestens 70 % der Gesamtlänge des Windenergieanlagenrotorblatts aufweisen. Die blattspitzenseitigen Enden der Heizelemente können in einem Abstand von der Blattspitze angeordnet sein. Die blattwurzenseitigen Enden der Heizelemente können in einem Abstand von der Blattwurzel angeordnet sein.

Die drei Heizelemente sind so angeordnet, dass sie im Betrieb einen Bereich des Windenergieanlagenrotorblatts erwärmen können, um dadurch die Bildung von Eiskristallen und die Ablagerung größerer Eismengen zu verhindern. Der Bereich befindet sich insbesondere auf und nahe einer Nasenkante des Rotorblatts, wo die Bildung von Eiskristallen am wahrscheinlichsten auftritt. Die Heizelemente können zum Beispiel einen Widerstandsdraht aufweisen, insbesondere aus Kupfer oder anderen geeigneten Metallen oder Metalllegierungen wie Konstantan, Manganin oder Isotan.

Das erste Heizelement und das zweite Heizelement sind zusammen mit Verstärkungsfasem der ersten bzw. zweiten Rotorblatthalbschale durch Aushärten eines flüssigen Kunststoffmaterials in eine Kunststoffmatrix eingebettet. Eingebettet kann bedeuten, dass die Heizelemente allseitig von dem Kunststoffmaterial umgeben sind. Ausführungen, bei denen die Heizelemente eine Oberfläche der Rotorblatthalbschalen bilden und durch das Kunststoffmaterial mit den Verstärkungsfasern verklebt sind, sind ebenfalls einbezogen. Durch das Einbetten fügen sich die Heizelemente - im Gegensatz zu nachträglich mit einer vorgefertigten Rotorblatthalbschale verbundenen Heizelementen - nahtlos in eine Oberflächenkontur des Rotorblatts ein, so dass die aerodynamischen Eigenschaften des Rotorblatts durch das erste und zweite Heizelement nicht beeinträchtigt werden.

Die Heizelemente können zum Beispiel ein Kohlenstofffasermaterial aufweisen. Das Kohlenstofffasermaterial kann in eine Kunststoffmatrix eingebettet sein, so dass das jeweilige Heizelement aus kohlenstofffaserverstärktem Kunststoff (CFK) besteht. Auch die genannten metallischen Heizelemente können in eine Kunststoffmatrix eingebettet sein. Das Kohlenstofffasermaterial kann flächig sein, insbesondere in Form eines dünnen Materialstreifens mit einer Stärke von beispielsweise weniger als 1 mm oder weniger als 0,5 mm.

Das dritte Heizelement kann auf eine Außenseite der beiden Rotorblatthalbschale(n) laminiert oder aufgeklebt sein. Mit Laminieren ist gemeint, dass das betreffende Heizelement in einem trockenen, noch nicht mit einem flüssigen Kunststoffmaterial durchtränkten Zustand auf die Außenseite des Windenergieanlagenrotorblatts bzw. auf die Außenseite der betreffenden Halbschale aufgelegt und dann mit dem Kunststoffmaterial durchtränkt wird, zum Beispiel durch Aufbringen des flüssigen Kunststoffmaterials mit einer Rolle.

Die beiden Rotorblatthalbschalen weisen ein faserverstärktes Kunststoffmaterial auf, wobei es sich bei den Verstärkungsfasern beispielsweise um Glas- und/oder Kohlenstofffasern handeln kann. Das flüssige Kunststoffmaterial kann beispielsweise ein Polyester- oder Epoxidharz sein. Die beiden Rotorblatthalbschalen können auch als druck- und saugseitige Rotorblatthalbschalen oder als Unter- und Oberschale bezeichnet werden. Sie sind zu dem Rotorblatt zusammengefügt, insbesondere durch Verkleben entlang Vorder- und Hinterkanten der beiden Halbschalen und/oder mit in Längsrichtung des Rotorblatts verlaufenden Stegen oder sonstigen Elementen einer Tragstruktur.

Dass das dritte Heizelement mit einer Rotorblatthalbschale verbunden ist, bedeutet, dass zwischen den beiden entweder eine unmittelbare Verbindung besteht - insbesondere durch Verkleben des Heizelements mit der Rotorblatthalbschale - oder, dass das Heizelement mit einem sonstigen Bauteil unmittelbar verbunden ist, welches der Rotorblatthalbschale zuzurechnen ist. Für diese Betrachtung ist insbesondere das erste Heizelement der ersten Rotorblatthalbschale und das zweite Heizelement der zweiten Rotorblatthalbschale zuzurechnen. Demnach ist das dritte Heizelement insbesondere dann mit der ersten Rotorblatthalbschale verbunden, wenn es unmittelbar mit der ersten Rotorblatthalbschale und/oder mit dem ersten Heizelement verbunden ist. Entsprechend ist das dritte Heizelement insbesondere dann mit der zweiten Rotorblatthalbschale verbunden, wenn es unmittelbar mit der zweiten Rotorblatthalbschale und/oder mit dem zweiten Heizelement verbunden ist. Eine nur mittelbare Verbindung zwischen dem dritten Heizelement und einer bestimmten Rotorblatthalbschale über die jeweils andere Halbschale gilt hingegen nicht als Verbindung im Sinne des Anspruchs. Beispielsweise wäre ein ausschließlich mit der ersten Rotorblatthalbschale verklebtes drittes Heizelement nicht mit der zweiten Rotorblatthalbschale verbunden.

Das dritte Heizelement ist insbesondere im Bereich einer Nasenkante des Rotorblatts angeordnet. Beispielsweise kann es eine Klebefuge zwischen einer Vorderkante der ersten Rotorblatthalbschale und einer Vorderkante der zweiten Rotorblatthalbschale überdecken.

Die Erfindung beruht auf der Erkenntnis, dass die aus dem Stand der Technik bekannten, schleifenförmig anzuordnenden Heizmatten erst nach dem Zusammenfügen der beiden Rotorblatthalbschalen montiert werden können, da sie bei der gewünschten Anordnung im Bereich der Profilnase in der Regel mit beiden Rotorblatthalbschalen zu verbinden sind. Die Montage nach dem Zusammenfügen der beiden Rotorblatthalbschalen ist jedoch aufwendig, da die zusammengefügten Rotorblatthalbschalen schwer handhabbar sind und zudem ein großer Oberflächenbereich des Rotorblatts zugänglich sein muss. Bei der Erfindung werden hingegen das erste Heizelement und das zweite Heizelement bereits vor dem Zusammenfügen der beiden Rotorblatthalbschalen verbaut, nämlich bereits bei der Herstellung der Rotorblatthalbschalen. Dadurch können die sich aus der Fertigung in Halbschalen ergebenden Vorteile auch mit Blick auf die Montage der Heizeinrichtung ausgeschöpft werden. Lediglich das dritte Heizelement, das mit beiden Rotorblatthalbschalen zu verbinden ist, wird erst nach dem Zusammenfügen der beiden Rotorblatthalbschalen montiert. Insbesondere bei einer Anordnung des dritten Heizelements im Bereich der Nasenkante muss hierfür jedoch nur ein relativ kleiner Oberflächenbereich des Rotorblatts zugänglich sein.

Durch die elektrische Verbindung der drei Heizelemente an ihren blattspitzenseitigen Enden entfällt zudem die Notwendigkeit, eine Heizmatte in einem Übergangsbereich umzulenken. Auch hierdurch vereinfacht sich die Herstellung. Der besondere Vorteil der aus dem Stand der Technik bekannten, schleifenförmigen Heizmatten bleibt jedoch erhalten, denn auch bei der Erfindung sind ausschließlich die blattwurzelseitigen Enden der drei Heizelemente mit elektrischen Anschlussleitungen zu versehen.

Bei der Erfindung ist vorgesehen, das blattwurzelseitige Ende eines der Heizelemente mit einem Pol einer elektrischen Energiequelle zu verbinden und die beiden blattwurzelseitigen Enden der beiden anderen Heizelemente mit dem anderen Pol der elektrischen Energiequelle. Diese Anordnung eignet sich gleichermaßen für eine Energieversorgung mit Wechselstrom oder Gleichstrom. In beiden Fällen führt das eine Heizelement die Summe des von den beiden anderen Heizelementen geführten elektrischen Stroms. Dadurch kann die Heizleistung auf dieses eine Heizelement konzentriert werden. Das eine Heizelement kann insbesondere das vorzugsweise im Bereich einer Profilnasenkante angeordnete dritte Heizelement sein, so dass die Heizleistung auf diesen Bereich konzentriert wird.

Eine zusätzliche Beeinflussung der von den einzelnen Heizelementen entfalteten Heizleistung ist durch Wahl der elektrischen Leitfähigkeiten der einzelnen Heizelemente möglich. Beispielsweise kann die elektrische Leitfähigkeit des dritten Heizelements größer gewählt werden als die elektrischen Leitfähigkeiten des ersten und zweiten Heizelements, beispielsweise um einen Faktor größer oder gleich 2. Bei einem Faktor 4 weist das eine Heizelement ungefähr dieselbe Heizleistung auf wie jedes der beiden parallel geschalteten Heizelemente.

In einer Ausgestaltung sind ein mit der ersten Rotorblatthalbschale verbundener Abschnitt des dritten Heizelements und das erste Heizelement teilweise überlappend angeordnet und/oder ein mit der zweiten Rotorblatthalbschale verbundener Abschnitt des dritten Heizelements und das zweite Heizelement sind teilweise überlappend angeordnet. Die Überlappungsbereiche können sich in Längsrichtung des Rotorblatts und in Längsrichtung der jeweiligen Heizelemente erstrecken. Sie können sich über die gesamte Länge der jeweiligen Heizelemente oder über einen Teil davon erstrecken. Die Überlappungsbereiche können eine gleichmäßige Breite von beispielsweise 1 cm bis 20 cm aufweisen oder bis zu beispielsweise 50 % der Breite des dritten Heizelements betragen. In den Überlappungsbereichen wird die Heizwirkung verstärkt. Die Heizleistung kann daher besonders gezielt eingesetzt werden.

In einer Ausgestaltung berühren die blattspitzenseitigen Enden des ersten Halteelements und/oder des zweiten Heizelements und/oder des dritten Heizelements einander unmittelbar. Durch diese Berührung wird ein unmittelbarer elektrischer Kontakt hergestellt. Hierfür kann es ausreichend sein, Heizelemente aus einem Kohlenstofffasermaterial unmittelbar übereinander auf die jeweiligen Rotorblatthalbschalen aufzulaminieren.

In einer Ausgestaltung sind die blattspitzenseitigen Enden des ersten, zweiten und dritten Heizelements über ein von den Heizelementen verschiedenes Verbindungsstück elektrisch leitend miteinander verbunden. Das Verbindungsstück und die Heizelemente können einander unmittelbar berühren, so dass ein elektrischer Kontakt besteht. Durch das Verbindungsstück können auch voneinander beabstandete Heizelemente einfach elektrisch leitend miteinander verbunden werden. Das Verbindungsstück kann ebenfalls auflaminiert werden.

In einer Ausgestaltung sind zwischen den blattspitzenseitigen Enden des Heizelementes einerseits und dem blattspitzenseitigen Ende des ersten und/oder zweiten Heizelements andererseits und/oder zwischen einem blattspitzenseitigen Ende eines der Heizelemente einerseits und dem Verbindungsstück andererseits Mittel zur Verbesserung des elektrischen Kontakts angeordnet. Die Mittel können aus Metall oder aus einem anderen elektrisch leitfähigen Material bestehen. Es kann sich beispielsweise um Metallspäne, Metalldrähte oder ein Gewebe oder Gelege aus Metalldrähten handeln.

In einer Ausgestaltung ist das Verbindungsstück in einem Querschnitt durch das Windenergieanlagenrotorblatt betrachtet außerhalb des ersten Heizelements, außerhalb des zweiten Heizelements und innerhalb des dritten Heizelements angeordnet. Beispielsweise kann das Verbindungsstück nach dem Verbinden des ersten Heizelements mit der ersten Rotorblatthalbschale und des zweiten Heizelements mit der zweiten Rotorblatthalbschale und nach dem Zusammenfügen der beiden Rotorblatthalbschalen aufgebracht werden, beispielsweise durch Laminieren. Anschließend wird das dritte Heizelement auf das Verbindungsstück aufgebracht, insbesondere durch Laminieren. Auf diese Weise wird die elektrische Verbindung zwischen den drei blattspitzenseitigen Enden der Heizelemente einfach und zuverlässig hergestellt.

In einer Ausgestaltung weist das Verbindungsstück ein Kohlenstofffasermaterial auf. Das Kohlenstofffasermaterial des Verbindungsstücks kann in eine Kunststoffmatrix eingebettet sein. Das Kohlenstofffasermaterial kann ein Gelege oder Gewebe aus Kohlenstofffasern sein, wie es auch als Faserverstärkungsmaterial für Windenergieanlagenrotorblätter eingesetzt wird.

In einer Ausgestaltung ist zwischen dem ersten und/oder zweiten Heizelement einerseits und dem dritten Heizelement andererseits eine elektrisch isolierende Schicht angeordnet. Die isolierende Schicht kann beispielsweise eine Lage eines faserverstärkten Kunststoffmaterials, insbesondere mit Glasfasern als Verstärkungsfasern, sein. Die isolierende Schicht schützt das erste und zweite Heizelement vor Beschädigung und äußeren Einflüssen. Außerdem wird ein unerwünschter elektrischer Kontakt zwischen diesen beiden Heizelementen und dem dritten Heizelement verhindert. Dies ist wichtig, damit die Heizelemente von ihren blattwurzelseitigen Enden bis zu ihren blattspitzenseitigen Enden hin von dem Strom durchflossen werden. Die elektrisch isolierende Schicht verhindert Kurzschlüsse insbesondere in Bereichen, in denen sich zwei Heizelemente überlappen oder aneinander angrenzen.

In einer Ausgestaltung weist die elektrisch isolierende Schicht am blattspitzenseitigen Ende des ersten Heizelements und/oder des zweiten Heizelements und/oder des dritten Heizelements eine Aussparung auf. Die Aussparung dient zur Herstellung einer elektrischen Verbindung zwischen den blattspitzenseitigen Enden der Heizelemente, gegebenenfalls über ein gesondertes Verbindungsstück.

Die oben genannte Aufgabe wird ebenfalls gelöst durch das Verfahren mit den Merkmalen des Anspruchs 9. Vorteilhafte Ausgestaltungen des Verfahrens sind in den sich anschließenden Unteransprüchen angegeben.

Das Verfahren dient zur Herstellung eines Windenergieanlagenrotorblatts, das ein faserverstärktes Kunststoffmaterial und eine elektrische Heizeinrichtung mit elektrischen Anschlüssen an einem blattwurzelseitigen Ende aufweist. Das Verfahren weist die folgenden Schritte auf:
- Herstellen einer ersten Rotorblatthalbschale aus einem faserverstärkten Kunststoffmaterial, die ein erstes Heizelement mit einem blattwurzelseitigen Ende und einem blattspitzenseitigen Ende aufweist, wobei das erste Heizelement und Verstärkungsfasern des faserverstärkten Kunststoffmaterials gleichzeitig durch Aushärten eines flüssigen Kunststoffmaterials in eine Kunststoffmatrix eingebettet werden,
- Herstellen einer zweiten Rotorblatthalbschale aus einem faserverstärkten Kunststoffmaterial, die ein zweites Heizelement mit einem blattwurzelseitigen Ende und einem blattspitzenseitigen Ende aufweist, wobei das zweite Heizelement und Verstärkungsfasern des faserverstärkten Kunststoffmaterials gleichzeitig durch Aushärten eines flüssigen Kunststoffmaterials in eine Kunststoffmatrix eingebettet werden,
- Zusammenfügen der ersten Rotorblatthalbschale und der zweiten Rotorblatthalbschale,
- Verbinden eines dritten Heizelements, das ein blattwurzelseitiges Ende und ein blattspitzenseitiges Ende aufweist, mit der ersten Rotorblatthalbschale und mit der zweiten Rotorblatthalbschale nach dem Zusammenfügen der ersten Rotorblatthalbschale und der zweiten Rotorblatthalbschale,
- Herstellen einer elektrischen Verbindung zwischen den blattspitzenseitigen Enden des ersten, zweiten und dritten Heizelements,
- Verbinden der blattwurzelseitigen Enden des ersten, zweiten und dritten Heizelements mit elektrischen Anschlussleitungen.

Es versteht sich, dass die Reihenfolge der Schritte teilweise abweichend ausgeführt werden kann. Zu den Erläuterungen der Merkmale des Verfahrens wird auf die vorstehenden Erläuterungen der Merkmale des Windenergieanlagenrotorblatts verwiesen, die entsprechend gelten. Dies gilt auch für die bei der Erläuterung des Windenergieanlagenrotorblatts angesprochenen weiteren Merkmale und Ausgestaltungen, die auch in Verbindung mit den erfindungsgemäßen Verfahren verwendet werden können, ebenso wie für die aufgeführten Vorteile. Das Verfahren kann insbesondere zur Herstellung des erfindungsgemäßen Windenergieanlagenrotorblatts verwendet werden.

Das Herstellen der beiden Rotorblatthalbschalen kann beispielsweise in einem Vakuuminfusionsverfahren erfolgen. Dabei werden Fasermaterialien in eine Halbschalenform eingelegt. Die Form wird luftdicht verschlossen, beispielsweise mit einer Vakuumfolie. Anschließend wird die Form evakuiert und ein flüssiges Kunststoffmaterial wird durch Ansaugkanäle in die Form geleitet, bis alle Hohlräume innerhalb der Form mit dem flüssigen Kunststoffmaterial gefüllt sind. Nach dem Aushärten des Kunststoffmaterials sind die Fasern in eine Kunststoffmatrix eingebettet. Bei der Erfindung ist das Verbinden des ersten Heizelements und des zweiten Heizelements mit der ersten bzw. zweiten Rotorblatthalbschale in diesen Fertigungsschritt integriert, so dass ein gesonderter Fertigungsschritt entfallen kann. Eine weitere Vereinfachung ergibt sich daraus, dass die Heizelemente bereits beim Einlegen in die betreffende Form einfach in der gewünschten Weise angeordnet werden können. Außerdem bedeutet es auch eine Zeitersparnis, weil anders als bei einem nachträglichen Verkleben keine zusätzliche Zeit für ein Aushärten des Klebstoffs benötigt wird. Weitere Vorteile sind die auf diese Weise erzielte besonders feste und dauerhafte Verbindung sowie glatte Oberflächen.

In einem nachfolgenden Verfahrensschritt werden die beiden Rotorblatthalbschalen zusammengefügt, wie bereits in Verbindung mit dem Rotorblatt erläutert.

Die drei Heizelemente werden mit den beiden Halbschalen verbunden, wie bereits im Zusammenhang mit dem Rotorblatt im Einzelnen erläutert.

Das Herstellen einer elektrischen Verbindung zwischen den blattspitzenseitigen Enden des ersten, zweiten und dritten Heizelements kann ebenfalls erfolgen, wie bereits erläutert, d.h. beispielsweise durch eine unmittelbare Berührung oder unter Verwendung eines gesonderten Verbindungsstücks.

In einem weiteren Verfahrensschritt werden die blattwurzelseitigen Enden des ersten, zweiten und dritten Heizelements mit elektrischen Anschlussleitungen verbunden. Durch diese elektrischen Anschlussleitungen kann die elektrische Energie zugeführt werden.

Das Verfahren ist besonders sicher auszuführen, weil die einzelnen Schritte einfach sind, insbesondere das Montieren der einzelnen Heizelemente. Besondere Schwierigkeiten, die sich bei dem aus dem Stand der Technik bekannten Verfahren aus dem schleifenförmigen Verlauf einer Heizmatte ergeben können, treten nicht auf.

In einer Ausgestaltung wird nach dem Herstellen der ersten Rotorblatthalbschale und der zweiten Rotorblatthalbschale ein von den Heizelementen verschiedenes Verbindungsstück aufgebracht, das die blattspitzenseitigen Enden des ersten, zweiten und dritten Heizelements elektrisch leitend miteinander verbindet. Auf die vorstehenden Erläuterungen des Verbindungsstücks des Windenergieanlagenrotorblatts wird verwiesen. Das Verbindungsstück kann aufgebracht werden, nachdem die beiden Rotorblatthalbschalen zusammengefügt worden sind. Das Verbindungsstück kann aufgebracht werden, bevor das dritte Heizelement mit den beiden Halbschalen verbunden wird. Nach dem Aufbringen des dritten Heizelements sind alle drei blattspitzenseitigen Enden der Heizelemente elektrisch leitend miteinander verbunden.

In einer Ausgestaltung wird vor dem Verbinden des dritten Heizelements mit den Rotorblatthalbschalen eine elektrisch isolierende Schicht aufgebracht, die das erste Heizelement und/oder das zweite Heizelement mindestens teilweise überdeckt. Insbesondere blattspitzenseitige Enden des ersten und/oder des zweiten Heizelements können ausgespart werden.

In einer Ausgestaltung wird die elektrisch isolierende Schicht beim Herstellen der ersten Rotorblatthalbschale und der zweiten Rotorblatthalbschale angeordnet. Dadurch kann auch das Aufbringen der isolierenden Schicht in den Fertigungsprozess der einzelnen Rotorblatthalbschalen integriert werden.

In einer Ausgestaltung weist die elektrisch isolierende Schicht eine Lage Verstärkungsfasern auf, die gleichzeitig mit den Verstärkungsfasern der ersten Rotorblatthalbschale oder der zweiten Rotorblatthalbschale in eine Kunststoffmatrix eingebettet wird. Bei den Verstärkungsfasern kann es sich beispielsweise um Glasfasern oder um ein sonstiges, elektrisch isolierendes Fasermaterial handeln. Dadurch wird die Herstellung der elektrisch isolierenden Schicht in den Schritt des Herstellens der jeweiligen Rotorblatthalbschale integriert, ähnlich wie vorstehend für das Verbinden des ersten und/oder zweiten Heizelements mit der jeweiligen Rotorblatthalbschale erläutert.

Die Erfindung wird nachfolgend anhand eines in fünf Figuren dargestellten Ausführungsbeispiels näher erläutert. Es zeigen:
- Fig. 1: zwei nebeneinander angeordnete Rotorblatthalbschalen mit jeweils einem Heizelement in einer Draufsicht,
- Fig. 2: die Anordnung aus Fig. 1 mit einem Verbindungsstück, das die blattspitzenseitigen Enden der beiden Heizelemente miteinander verbindet,
- Fig. 3: die Anordnung aus Fig. 2 mit einer elektrisch isolierenden Schicht,
- Fig. 4: die Anordnung aus Fig. 3 mit einem dritten Heizelement und einer schematisch angedeuteten elektrischen Energieversorgung,
- Fig. 5: ein erfindungsgemäßes Windenergieanlagenrotorblatt im Querschnitt.

Alle Figuren sind schematisch und vereinfacht. In allen Figuren werden dieselben Bezugszeichen verwendet.

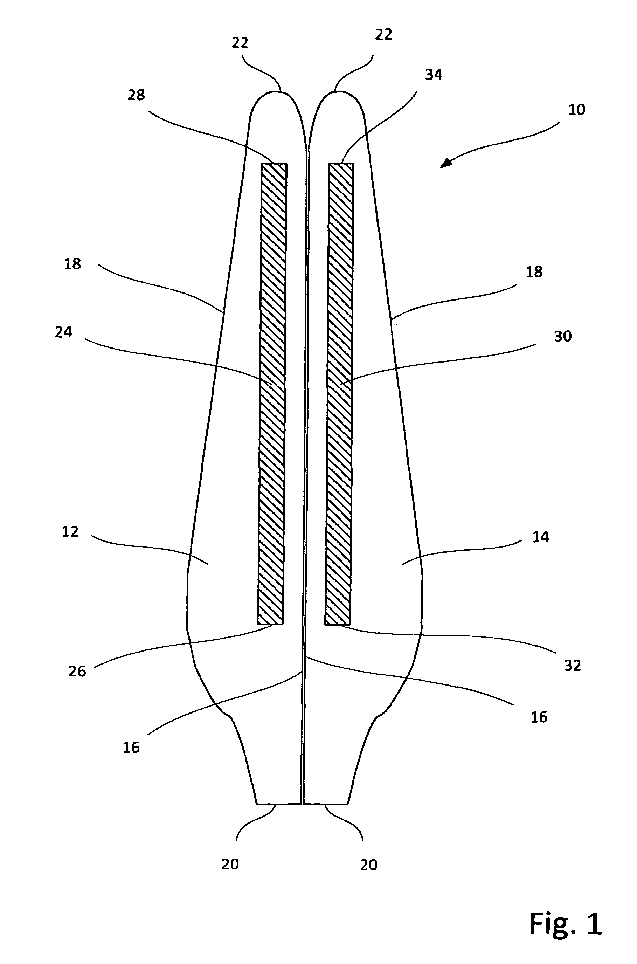

In der Fig. 1 sind eine erste Rotorblatthalbschale 12 und eine zweite Rotorblatthalbschale 14 nebeneinander angeordnet. Die beiden Rotorblatthalbschalen 12, 14 weisen jeweils eine Vorderkante 16 und eine Hinterkante 18 auf, sowie eine Blattwurzel 20 und eine Blattspitze 22.

In die erste Rotorblatthalbschale 12 integriert ist ein erstes Heizelement 24, das ein blattwurzelseitiges Ende 26 und ein blattspitzenseitiges Ende 28 aufweist. In die zweite Rotorblatthalbschale 14 integriert ist ein zweites Heizelement 30, das ebenfalls ein blattwurzelseitiges Ende 32 und ein blattspitzenseitiges Ende 34 aufweist. Die beiden Heizelemente 24, 30 erstrecken sich in Längsrichtung der jeweiligen Rotorblatthalbschale 12, 14 und weisen jeweils einen Abstand von dessen Vorderkante 16 auf.

Das erste Heizelement 24 und das zweite Heizelement 30 bestehen jeweils aus einem Kohlenstofffasermaterial, das in eine Kunststoffmatrix eingebettet ist. Sie sind gemeinsam mit den beiden Rotorblatthalbschalen 12, 14 in einem Vakuuminfusionsverfahren hergestellt worden.

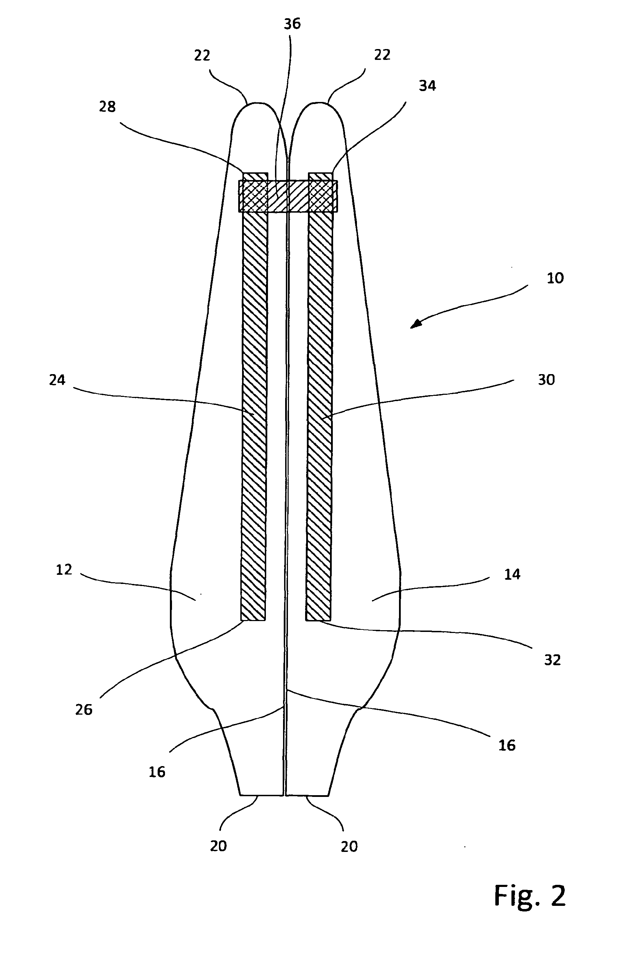

In der Fig. 2 sind die beiden Rotorblatthalbschalen 12, 14 in derselben Anordnung dargestellt wie in der Fig. 1, obwohl sie zum Zeitpunkt des dargestellten Verfahrensschritts bereits zusammengefügt sein können. Zusätzlich zu den bereits im Zusammenhang mit der Fig. 1 erläuterten Bestandteilen zeigt Fig. 2 ein Verbindungsstück 36, das eine elektrisch leitende Verbindung zwischen dem blattspitzenseitigen Ende 28 des ersten Heizelements 24 und dem blattspitzenseitigen Ende 34 des zweiten Heizelements 30 herstellt. Das Verbindungsstück 36 besteht aus einem auf die erste und zweite Rotorblatthalbschale 12, 14 auflaminierten Kohlenstofffasermaterial.

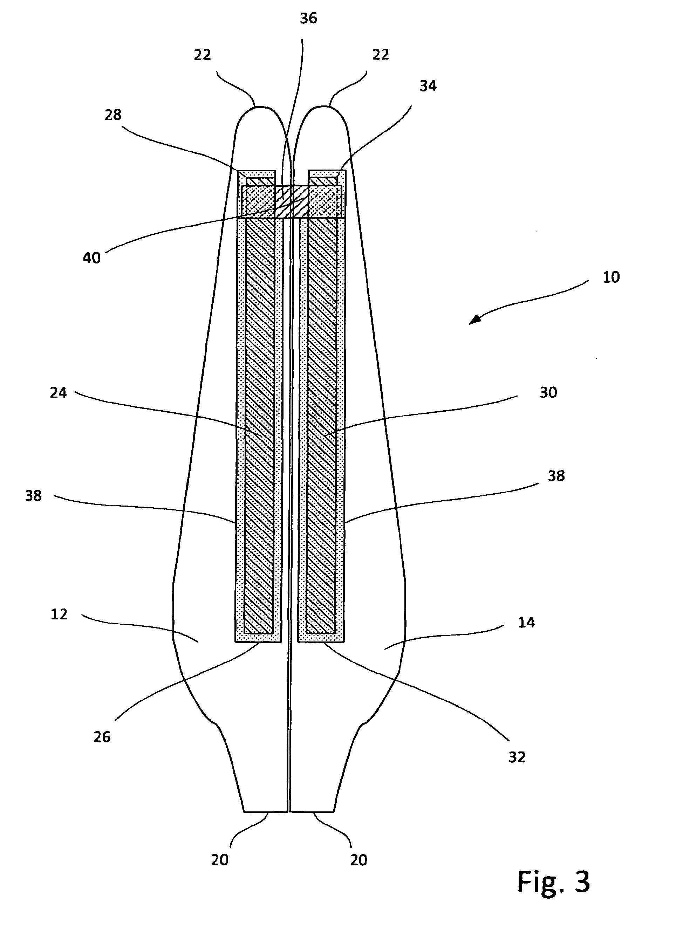

Zusätzlich zu den Elementen der Fig. 2 zeigt Fig. 3 eine elektrisch isolierende Schicht 38, die das erste Heizelement 24 und das zweite Heizelement 30 vollständig überdeckt. Im Bereich des Verbindungsstücks 36, zwischen dem blattspitzenseitigen Ende 28 des ersten Heizelements 24 und dem blattspitzenseitigen Ende 34 des zweiten Heizelements 30, weist die elektrisch isolierende Schicht 38 eine Aussparung 40 auf.

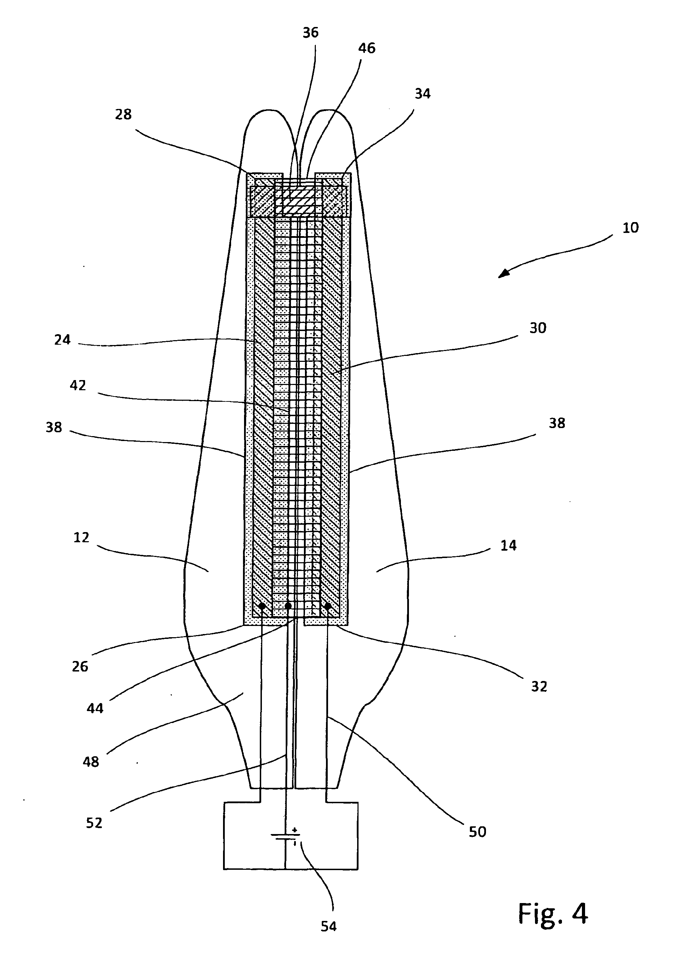

In der Fig. 4 ist zusätzlich ein drittes Heizelement 42 gezeigt, das in Längsrichtung des Windenergieanlagenrotorblatts 10 im Bereich der Nasenkante angeordnet ist. Das dritte Heizelement 40 überdeckt eine Klebefuge zwischen den Vorderkanten 16 der ersten Rotorblatthalbschale 12 und der zweiten Rotorblatthalbschale 14. Das dritte Heizelement 42 weist ein blattwurzelseitiges Ende 44 und ein blattspitzenseitiges Ende 46 auf. Das blattspitzenseitige Ende 46 des dritten Heizelements 42 ist im Bereich der Aussparung 40 der elektrisch isolierenden Schicht 38 angeordnet, so dass es dort das Verbindungsstück 36 unmittelbar berührt. Dadurch wird eine elektrische Verbindung zwischen dem blattspitzenseitigen Ende 46 des dritten Heizelements 42 und dem Verbindungsstück 36 und somit zu den blattspitzenseitigen Enden 28, 34 des ersten und zweiten Heizelements 24, 30 hergestellt.

Das blattwurzelseitige Ende 28 des ersten Heizelements 24 ist mit einer elektrischen Anschlussleitung 48, das blattwurzelseitige Ende 32 des zweiten Heizelements 30 ist mit einer elektrischen Anschlussleitung 50 und das Blattwurzelseitige Ende 44 des dritten Heizelements 42 ist mit einer elektrischen Anschlussleitung 52 verbunden. Die elektrischen Anschlussleitungen 48, 50 sind mit einem Pol einer elektrischen Energiequelle 54 verbunden. Die elektrische Anschlussleitung 52 ist mit dem anderen Pol der elektrischen Energiequelle 54 verbunden. Die Fig. 4 zeigt als elektrische Energiequelle 54 eine Gleichspannungsquelle. Ebensogut kann eine Wechselspannungsquelle verwendet werden.

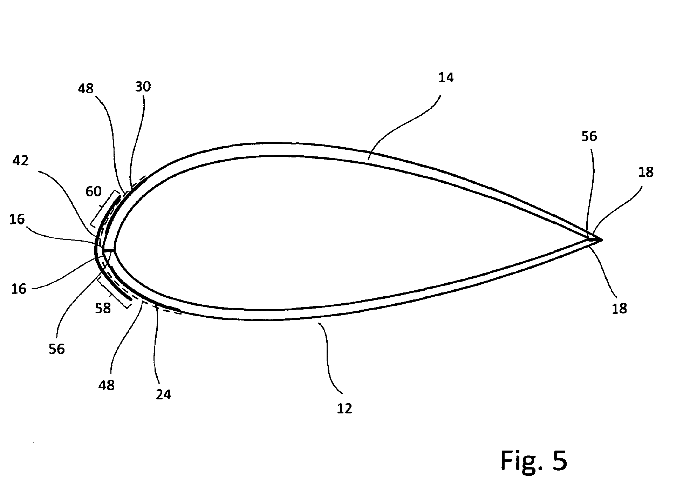

Fig. 5 zeigt das Windenergieanlagenrotorblatt 10 der Figuren 1 bis 4 im Querschnitt an einer mittleren Längsposition der drei Heizelemente 24, 30, 42. Man erkennt die erste Rotorblatthalbschale 12 und die zweite Rotorblatthalbschale 14, jeweils mit einer Vorderkante 16 und einer Hinterkante 18. Die erste Rotorblatthalbschale 12 und die zweite Rotorblatthalbschale 14 sind mit Klebstoff 56 im Bereich der Vorderkanten 16 und Hinterkanten 18 zusammengefügt.

An einer Außenseite der ersten Rotorblatthalbschale 12 befindet sich das erste Heizelement 24. Das zweite Heizelement 30 befindet sich auf einer Außenseite der zweiten Rotorblattschale 14. Das erste Heizelement 24 und das zweite Heizelement 30 weisen jeweils einen Abstand von der Vorderkante 16 der jeweiligen Rotorblatthalbschale 12, 14 auf.

Im Querschnitt außerhalb des ersten Heizelements 24 und des zweiten Heizelements 30 befindet sich eine elektrisch isolierende Schicht 48 aus einem mit Glasfasern verstärkten Kunststoffmaterial. Die elektrisch isolierende Schicht 48 wurde in einem Vakuuminfusionsverfahren gemeinsam mit den übrigen Verstärkungsfasern der jeweiligen Rotorblatthalbschale 12, 14 und dem betreffenden Heizelement 24, 30 in eine Kunststoffmatrix eingebettet. Hierzu wurden die genannten Materialien in eine Vakuumform eingelegt. Dieser Herstellungsvorgang äußert sich darin, dass die von der elektrisch isolierenden Schicht 48 und den seitlich angrenzenden Teilen der Rotorblatthalbschalen 12, 14 gebildete Fläche glatt ist, entsprechend der Oberfläche der verwendeten Vakuumform.

Im Querschnitt nochmals außerhalb von der elektrisch isolierenden Schicht 48 ist das dritte Heizelement 42 angeordnet, das sowohl mit der ersten Rotorblatthalbschale 12 als auch mit der zweiten Rotorblatthalbschale 14 verbunden ist. Es ist auf die beiden miteinander verbundenen Rotorblatthalbschalen 12, 14 auflaminiert.

Ein Abschnitt 58 des dritten Heizelements 42 überlappt das erste Heizelement 24 und ein Abschnitt 60 des dritten Heizelements 42 überlappt das zweite Heizelement 30.

### Bezugszeichenliste:

- 10: Windenergieanlagenrotorblatt
- 12: erste Rotorblatthalbschale
- 14: zweite Rotorblatthalbschale
- 16: Vorderkante
- 18: Hinterkante
- 20: blattwurzelseitige Enden der Rotorblatthalbschalen
- 22: blattspitzenseitige Enden der Rotorblatthalbschalen
- 24: erstes Heizelement
- 26: blattwurzelseitiges Ende des ersten Heizelements
- 28: blattspitzenseitiges Ende des ersten Heizelements
- 30: zweites Heizelement
- 32: blattwurzelseitiges Ende des zweiten Heizelements
- 34: blattspitzenseitiges Ende des zweiten Heizelements
- 36: Verbindungsstück
- 38: elektrisch isolierende Schicht
- 40: Aussparung
- 42: drittes Heizelement
- 44: blattwurzelseitiges Ende des dritten Heizelements
- 46: blattspitzenseitiges Ende des dritten Heizelements
- 48: elektrische Anschlussleitung des blattwurzelseitigen Endes des ersten Heizelements
- 50: elektrische Anschlussleitung des blattwurzelseitigen Endes des zweiten Heizelements
- 52: elektrische Anschlussleitung des blattwurzelseitigen Endes des dritten Heizelements
- 54: Elektrische Energiequelle
- 56: Klebstoff
- 58: Abschnitt des dritten Heizelements, der das erste Heizelement überlappt
- 60: Abschnitt des dritten Heizelements, der das zweite Heizelement überlappt

## Patentansprüche

1. Windenergieanlagenrotorblatt (10), das ein faserverstärktes Kunststoffmaterial und eine elektrische Heizeinrichtung mit elektrischen Anschlüssen an einem blattwurzelseitigen Ende aufweist, wobei das Windenergieanlagenrotorblatt aus einer ersten Rotorblatthalbschale (12) und einer zweiten Rotorblatthalbschale (14) aus einem faserverstärkten Kunststoffmaterial zusammengefügt ist und die elektrische Heizeinrichtung folgendes aufweist:
• ein erstes Heizelement (24), das ein blattwurzelseitiges Ende (26) und ein blattspitzenseitiges Ende (28) aufweist und bei der Herstellung der ersten Rotorblatthalbschale (12) gleichzeitig mit Verstärkungsfasern der ersten Rotorblatthalbschale (12) durch Aushärten eines flüssigen Kunststoffmaterials in eine Kunststoffmatrix eingebettet worden ist,
• ein zweites Heizelement (30), das das ein blattwurzelseitiges Ende (32) und ein blattspitzenseitiges Ende (34) aufweist und bei der Herstellung der zweiten Rotorblatthalbschale (14) gleichzeitig mit Verstärkungsfasern der zweiten Rotorblatthalbschale (14) durch Aushärten eines flüssigen Kunststoffmaterials in eine Kunststoffmatrix eingebettet worden ist,
• ein drittes Heizelement (42), das mit der ersten Rotorblatthalbschale (12) und mit der zweiten Rotorblatthalbschale (14) verbunden ist und ein blattwurzelseitiges Ende (44) und ein blattspitzenseitiges Ende (46) aufweist, dadurch gekennzeichet, dass
• die blattspitzenseitigen Enden (28, 34, 46) des ersten, zweiten und dritten Heizelements (24, 30, 42) elektrisch leitend miteinander verbunden sind und
• die blattwurzelseitigen Enden (26, 32, 44) des ersten, zweiten und dritten Heizelements (24, 30, 42) jeweils mit einer elektrischen Anschlussleitung (48, 50, 52) verbunden sind.

2. Windenergieanlagenrotorblatt (10) nach Anspruch 1, **dadurch gekennzeichnet, dass** ein mit der ersten Rotorblatthalbschale (12) verbundener Abschnitt (58) des dritten Heizelements (42) und das erste Heizelement (24) überlappend angeordnet sind und/oder dass ein mit der zweiten Rotorblatthalbschale (14) verbundener Abschnitt (60) des dritten Hcizelements (42) und das zweite Heizelement (30) überlappend angeordnet sind.

3. Windenergieanlagenrotorblatt (10) nach Anspruch 1 oder 2, **dadurch gekennzeichnet, dass** die blattspitzenseitigen Enden (28, 34, 46) des ersten Heizelements (24) und/oder des zweiten Heizelements (30) und/oder des dritten Heizelements (42) einander unmittelbar berühren.

4. Windenergieanlagenrotorblatt (10) nach Anspruch 1 oder 2, **dadurch gekennzeichnet, dass** die blattspitzenseitigen Enden (28, 34, 46) des ersten, zweiten und dritten Heizelements (24, 30, 42) über ein von den Heizelementen (24, 30, 42) verschiedenes Verbindungsstück (36) elektrisch leitend miteinander verbunden sind.

5. Windenergieanlagenrotorblatt (10) nach Anspruch 3 oder 4, **dadurch gekennzeichnet, dass** zwischen dem blattspitzenseitigen Ende (46) des dritten Heizelements (42) einerseits und dem blattspitzenseitigen Ende (28, 34) des ersten und/oder zweiten Heizelements (24, 30) andererseits und/oder zwischen einem blattspitzenseitigen Ende (28, 34, 46) eines der Heizelemente (24, 30, 42) einerseits und dem Verbindungsstück (36) andererseits Mittel zur Verbesserung des elektrischen Kontakts angeordnet sind.

6. Windencrgieanlagenrotorblatt (10) nach Anspruch 4 oder 5, **dadurch gekennzeichnet, dass** das Verbindungsstück (36) ein Kohlenstofffasermaterial aufweist.

7. Windenergieanlagenrotorblatt (10) nach einem der Ansprüche 1 bis 6, **dadurch gekennzeichnet, dass** zwischen dem ersten und/oder zweiten Heizelement (24, 30) einerseits und dem dritten Heizelement (42) andererseits eine elektrisch isolierende Schicht (38) angeordnet ist.

8. Windenergieanlagenrotorblatt nach Anspruch 7, **dadurch gekennzeichnet, dass** die elektrisch isolierende Schicht (38) am blattspitzenseitigen Ende (28, 34, 46) des ersten Heizelements (24) und/oder des zweiten Heizelements (30) und/oder des dritten Heizelements (42) eine Aussparung (40) aufweist.

9. Verfahren zur Herstellung eines Windenergieanlagenrotorblatts (10), das ein faserverstärktes Kunststoffmaterial und eine elektrische Heizeinrichtung mit elektrischen Anschlüssen an einem blattwurzelseitigen Ende aufweist, wobei das Verfahren die folgenden Schritte aufweist:
• Herstellen einer ersten Rotorblatthalbschale (12) aus einem faserverstärkten Kunststoffmaterial, die ein erstes Heizelement (24) mit einem blattwurzelseitigen Ende (26) und einem blattspitzenseitigen Ende (28) aufweist, wobei das erste Heizelement (24) und Verstärkungsfasern des faserverstärkten Kunststoffmaterials gleichzeitig **durch** Aushärten eines flüssigen Kunststoffmaterials in eine Kunststoffmatrix eingebettet werden,
• Herstellen einer zweiten Rotorblatthalbschale (14) aus einem faserverstärkten Kunststoffmaterial, die ein zweites Heizelement (30) mit einem blattwurzelscitigen Ende (32) und einem blattspitzcnseitigen Ende (34) aufweist, wobei das zweite Heizelement (30) und Verstärkungsfasem des faserverstärkten Kunststoffmaterials gleichzeitig **durch** Aushärten eines flüssigen Kunststoffmaterials in eine Kunststoffmatrix eingebettet werden,
• Zusammenfügen der ersten Rotorblatthalbschale (12) und der zweiten Rotorblatthalbschale (14),
• Verbinden eines dritten Heizelements (42), das ein blattwurzelseitiges Ende (44) und ein blattspitzenseitiges Ende (46) aufweist, mit der ersten Rotorblatthalbschale (12) und mit der zweiten Rotorblatthalbschale (14) nach dem Zusammenfügen der ersten Rotorblatthalbschale (12) und der zweiten Rotorblatthalbschale (14), gekenntzeichnet durch
• Herstellen einer elektrischen Verbindung zwischen den blattspitzenseitigen Enden (28, 34, 46) des ersten, zweiten und dritten Heizelements (24, 30, 42), und
• Verbinden der blattwurzelseitigen Enden (26, 32, 44) des ersten, zweiten und dritten Heizelements (24, 30, 42) mit elektrischen Anschlussleitungen (48, 50, 52).

10. Verfahren nach Anspruch 9, **dadurch gekennzeichnet, dass** nach dem Herstellen der ersten Rotorblatthalbschale (12) und der zweiten Rotorblatthalbschale (14) ein von den Heizelementen (24, 30, 42) verschiedenes Verbindungsstück (36) aufgebracht wird, das die blattspitzenseitigen Enden (28, 34, 46) des ersten, zweiten und dritten Heizelements (24, 30, 42) elektrisch leitend miteinander verbindet.

11. Verfahren nach Anspruch 9 oder 10, **dadurch gekennzeichnet, dass** vor dem Verbinden des dritten Heizelements (42) mit den Rotorblatthalbschalen (12, 14) eine elektrische isolierende Schicht (38) angeordnet wird, die das erste Heizelement (24) und/oder das zweite Heizelement (30) mindestens teilweise überdeckt.

12. Verfahren nach Anspruch 11, **dadurch gekennzeichnet, dass** die elektrisch isolierende Schicht (38) beim Herstellen der ersten Rotorblatthalbschale (12) und der zweiten Rotorblatthalbschale (14) angeordnet wird.

13. Verfahren nach Anspruch 12, **dadurch gekennzeichnet, dass** die elektrisch isolierende Schicht (38) eine Lage Verstärkungsfasern aufweist, die gleichzeitig mit den Verstärkungsfasern der ersten Rotorblatthalbschale (12) oder der zweiten Rotorblatthalbschale (14) in eine Kunststoffmatrix eingebettet wird.

## Claims

1. A wind turbine rotor blade (10) which includes a fiber-reinforced plastics material and an electrical heating device having electrical connections at a blade root end, wherein the wind turbine rotor blade is assembled from a first rotor blade half shell (12) and a second rotor blade half shell (14) made of a fiber-reinforced plastics material and the electrical heating device includes the following:
• a first heating element (24) which has a blade root end (26) and a blade tip end (28) and, during the production of the first rotor blade half shell (12), was embedded in a plastics matrix contemporaneously with reinforcement fibers of the first rotor blade half shell (12) by curing a liquid plastics material,
• a second heating element (30) which has a blade root end (32) and a blade tip end (34) and, during the production of the second rotor blade half shell (14), was embedded in a plastics matrix contemporaneously with reinforcement fibers of the second rotor blade half shell (14) by curing a liquid plastics material,
• a third heating element (42) which is connected to the first rotor blade half shell (12) and to the second rotor blade half shell (14) and has a blade root end (44) and a blade tip end (46), **characterized in that**
• the blade tip ends (28, 34, 46) of the first, second and third heating elements (24, 30, 42) are connected to each other in an electrically conductive manner, and
• the blade root ends (26, 32, 44) of the first, second and third heating elements (24, 30, 42) each are connected to an electrical connecting line (48, 50, 52).

2. The wind turbine rotor blade (10) according to claim 1, **characterized in that** a section (58) of the third heating element (42) connected to the first rotor blade half shell (12) and the first heating element (24) are arranged in an overlapping manner, and/or **in that** a section (60) of the third heating element (42) connected to the second rotor blade half shell (14) and the second heating element (30) are arranged in an overlapping manner.

3. The wind turbine rotor blade (10) according to claim 1 or 2, **characterized in that** the blade tip ends (28, 34, 46) of the first heating element (24) and/or of the second heating element (30) and/or of the third heating element (42) are in direct contact with one another.

4. The wind turbine rotor blade (10) according to claim 1 or 2, **characterized in that** the blade tip ends (28, 34, 46) of the first, second and third heating elements (24, 30, 42) are connected together in an electrically conductive manner via a connecting piece (36) which is distinct from the heating elements (24, 30, 42).

5. The wind turbine rotor blade (10) according to claim 3 or 4, **characterized in that** means for improving the electrical contact are arranged between the blade tip end (46) of the third heating element (42) on the one hand and the blade tip end (28, 34) of the first and/or second heating element (24, 30) on the other hand and/or between a blade tip end (28, 34, 46) of one of the heating elements (24, 30, 42) on the one hand and the connecting piece (36) on the other hand.

6. The wind turbine rotor blade according to claim 4 or 5, **characterized in that** the connecting piece (36) includes a carbon fiber material.

7. The wind turbine rotor blade (10) according to one of the claims 1 to 6, **characterized in that** an electrically insulating layer (38) is arranged between the first and/or second heating element (24, 30) on the one hand and the third heating element (42) on the other hand.

8. The wind turbine rotor blade according to claim 7, **characterized in that** the electrically insulating layer (38) has a cutout (40) at the blade tip end (28, 34, 46) of the first heating element (24) and/or of the second heating element (30) and/or of the third heating element (42).

9. A method for producing a wind turbine rotor blade (10) which includes a fiber-reinforced plastics material and an electrical heating device having electrical connections at a blade root end, said method compusing the following steps:
• producing a first rotor blade half shell (12) from a fiber-reinforced plastics material, said first rotor blade half shell (12) includes a first heating element (24) having a blade root end (26) and a blade tip end (28), wherein the first heating element (24) and reinforcement fibers of the fiber-reinforced plastics material are contemporaneously embedded in a plastics matrix by curing a liquid plastics material,
• producing a second rotor blade half shell (14) from a fiber-reinforced plastics material, said second rotor blade half shell (14) includes a second heating element (30) having a blade root end (32) and a blade tip end (34), wherein the second heating element (30) and reinforcement fibers of the fiber-reinforced plastics material are contemporaneously embedded in a plastics matrix by curing a liquid plastics material,
• joining the first rotor blade half shell (12) and the second rotor blade half shell (14),
• connecting a third heating element (42) which has a blade root end (44) and a blade tip end (46) to the first rotor blade half shell (12) and to the second rotor blade half shell (14) after the joining of the first rotor blade half shell (12) and the second rotor blade half shell (14), **characterized by**
• producing an electrical connection between the blade tip ends (28, 34, 46) of the first, second and third heating elements (24, 30, 42),
• connecting the blade root ends (26, 32, 44) of the first, second and third heating elements (24, 30, 42) to electrical connecting lines (48, 50, 52).

10. The method according to claim 9, **characterized in that**, after the production of the first rotor blade half shell (12) and the second rotor blade half shell (14), a connecting piece (36) distinct from the heating elements (24, 30, 42) is attached, said connecting piece (36) connecting the blade tip ends (28, 34, 46) of the first, second and third heating elements (24, 30, 42) together in an electrically conductive manner.

11. The method according to claim 9 or 10, **characterized in that**, before the third heating element (42) is connected to the rotor blade half shells (12, 14), an electrically insulating layer (38) is arranged, said electrically insulating layer (38) at least partially covering the first heating element (24) and/or the second heating element (30).

12. The method according to claim 11, **characterized in that** the electrically insulating layer (38) is arranged during the production of the first rotor blade half shell (12) and of the second rotor blade half shell (14).

13. The method according to claim 12, **characterized in that** the electrically insulating layer (38) has a layer of reinforcement fibers which are embedded in a plastics matrix contemporaneously with the reinforcement fibers of the first rotor blade half shell (12) or of the second rotor blade half shell (14).

## Revendications

1. Pale de rotor d'éolienne (10), qui présente un matériau en matière plastique renforcé de fibre et un dispositif de chauffage électrique ave des connexions électriques à une extrémité côté base de la pale, la pale de rotor d'éolienne étant assemblée à partir d'une première demi-coque de pale de rotor (12) et d'une deuxième demi-coque de pale de rotor (14) en matériau en matière plastique renforcé de fibre, et le dispositif de chauffage électrique présentant les éléments suivants :
• un premier élément chauffant (24), qui présente une extrémité coté base de pale (26) et une extrémité côté pointe de pale (28) et qui, lors de la fabrication de la première demi-coque de pale de rotor (12), a été noyé dans une matrice en matière plastique en même temps que des fibres de renforcement de la première demi-coque de pale de rotor (12) par durcissement d'un matériau en matière plastique liquide,
• un deuxième élément chauffant (30), qui présente une extrémité côté base de pale (32) et une extrémité côté pointe de pale (34) et qui, lors de la fabrication de la deuxième demi-coque de pale de rotor (14), a été noyé dans une matrice en matière plastique en même temps que des fibres de renforcement de la deuxième demi-coque de pale de rotor (14) par durcissement d'un matériau en matière plastique liquide,
• un troisième élément chauffant (42), qui est raccordé à la première demi-coque de pale de rotor (12) et à la deuxième demi-coque de pale de rotor (14) et qui présente une extrémité côté base de pale (44) et une extrémité côté pointe de pale (46), **caractérisée en ce que**
• les extrémités côté pointe de pale (28, 34, 46) du premier, deuxième et troisième élément chauffant (24, 30, 42) sont raccordées entre elles de façon électriquement conductrice et
• les extrémités coté base de pale (26, 32, 44) du premier, deuxième et troisième élément chauffant (24, 30, 42) sont respectivement raccordées à une ligne de connexion électrique (48, 50, 52).

2. Pale de rotor d'éolienne (10) selon la revendication 1, **caractérisée en ce qu'**un tronçon (58) du troisième élément chauffant (42) raccordé à la première demi-coque de pale de rotor (12) et le premier élément chauffant (24) sont disposés en chevauchement et/ou **en ce qu'**un tronçon (60) du troisième élément chauffant (42) raccordé à la deuxième demi-coque de pale de rotor (14) et le deuxième élément chauffant (30) sont disposés en chevauchement.

3. Pale de rotor d'éolienne (10) selon la revendication 1 ou 2, **caractérisée en ce que** les extrémités côté pointe de pale (28, 34, 46) du premier élément chauffant (24) et/ou du deuxième élément chauffant (30) et/ou du troisième élément chauffant (42) se touchent directement les unes les autres.

4. Pale de rotor d'éolienne (10) selon la revendication 1 ou 2, **caractérisée en ce que** les extrémités côté pointe de pale (28, 34, 46) du premier, deuxième et troisième élément chauffant (24, 30, 42) sont raccordées les unes aux autres de façon électriquement conductrice par le biais d'une pièce de raccordement (36) différente des éléments chauffants (24, 30, 42).

5. Pale de rotor d'éolienne (10) selon la revendication 3 ou 4, **caractérisée en ce que**, entre l'extrémité côté pointe de pale (46) du troisième élément chauffant (42) d'une part et l'extrémité côté pointe de pale (28, 34) du premier et/ou du deuxième élément chauffant (24, 30) d'autre part et/ou entre une extrémité côté pointe de pale (28, 34, 46) d'un des éléments chauffants (24, 30, 42) d'une part et la pièce de raccordement (36) d'autre part, il est disposé des moyens d'amélioration du contact électrique.

6. Pale de rotor d'éolienne (10) selon la revendication 4 ou 5, **caractérisée en ce que** la pièce de raccordement (36) présente un matériau en fibre de carbone.

7. Pale de rotor d'éolienne (10) selon une des revendications 1 à 6, **caractérisée en ce que**, entre le premier et/ou deuxième élément chauffant (24, 30) d'une part et le troisième élément chauffant (42) d'autre part, il est disposé une couche (38) électriquement isolante.

8. Pale de rotor d'éolienne (10) selon la revendication 7, **caractérisée en ce que** la couche (38) électriquement isolante présente un évidement (40) à l'extrémité côté pointe de pale (28, 34, 46) du premier élément chauffant (24) et/ou du deuxième élément chauffant (30) et/ou du troisième élément chauffant (42).

9. Procédé de fabrication d'une pale de rotor d'éolienne (10) qui présente un matériau en matière plastique renforcé de fibre et un dispositif de chauffage électrique avec des connexions électriques à une extrémité côté base de pale, le procédé présentant les étapes suivantes :
• fabrication d'une première demi-coque de pale de rotor (12) à partir d'un matériau en matière plastique renforcé de fibre, qui présente un premier élément chauffant (24) avec une extrémité coté base de pale (26) et une extrémité côté pointe de pale (28), le premier élément chauffant (24) et des fibres de renforcement du matériau en matière plastique renforcé de fibre étant noyés dans une matrice en matière plastique simultanément par le durcissement d'un matériau en matière plastique liquide,
• fabrication d'une deuxième demi-coque de pale de rotor (14) à partir d'un matériau en matière plastique renforcé de fibre, qui présente un deuxième élément chauffant (30) avec une extrémité côté base de pale (32) et une extrémité côté pointe de pale (34), le deuxième élément chauffant (30) et des fibres de renforcement du matériau en matière plastique renforcé de fibre étant noyés dans une matrice en matière plastique simultanément par le durcissement d'un matériau en matière plastique liquide,
• assemblage de la première demi-coque de pale de rotor (12) et de la deuxième demi-coque de pale de rotor (14),
• raccordement d'un troisième élément chauffant (42), qui présente une extrémité côté base de pale (44) et une extrémité côté pointe de pale (46), à la première demi-coque de pale de rotor (12) et à la deuxième demi-coque de pale de rotor (14) après l'assemblage de la première demi-coque de pale de rotor (12) et de la deuxième demi-coque de pale de rotor (14), **caractérisé par**
• la fabrication d'une connexion électrique entre les extrémités côté pointe de pale (28, 34, 46) du premier, deuxième et troisième élément chauffant (24, 30, 42), et
• le raccordement des extrémités coté base de pale (26, 32, 44) du premier, deuxième et troisième élément chauffant (24, 30, 42) à des lignes de connexion électriques (48, 50, 52).

10. Procédé selon la revendication 9, **caractérisé en ce que**, après la fabulation de la première demi-coque de pale de rotor (12) et de la deuxième demi-coque de pale de rotor (14), il est appliqué une pièce de raccordement (36) différente des éléments chauffants (24, 30, 42) qui raccorde entre elles de façon électriquement conductrice les extrémités côté pointe de pale (28, 34, 46) du premier, deuxième et troisième élément chauffant (24, 30, 42).

11. Procédé selon la revendication 9 ou 10, **caractérisé en ce que**, avant le raccordement du troisième élément chauffant (42) aux demi-coques de pale de rotor (12, 14), il est disposé une couche (38) électriquement isolante qui recouvre au moins partiellement le premier élément chauffant (24) et/ou le deuxième élément chauffant (30).

12. Procédé selon la revendication 11, **caractérisé en ce que** la couche (38) électriquement isolante est disposée lors de la fabulation de la première demi-coque de pale de rotor (12) et de la deuxième demi-coque de pale de rotor (14).

13. Procédé selon la revendication 12, **caractérisé en ce que** la couche (38) électriquement isolante présente une nappe de fibres de renforcement qui est noyée dans une matrice en matière plastique en même temps que les fibres de renforcement de la première demi-coque de pale de rotor (12) ou de la deuxième demi-coque de pale de rotor (14).
